Europäisches Patentamt

European Patent Office

Office européen des brevets

(11) Publication number: **0 185 409**
**A2**

# (12) EUROPEAN PATENT APPLICATION

(21) Application number: 85201903.3

(22) Date of filing: 18.11.85

(51) Int. Cl.⁴: **B 07 B 1/48**
**B 07 B 1/46, B 01 D 35/28**

(30) Priority: 19.11.84 NL 8403518

(43) Date of publication of application:
25.06.86 Bulletin 86/26

(84) Designated Contracting States:
AT BE CH DE FR GB IT LI LU NL SE

(71) Applicant: Flow Control Service B.V.
Seinpostweg 36
NL-1976 BT IJmuiden(NL)

(72) Inventor: Timmer, Bernardus Hermanus
de Brink 10
NL-9581 TB Musselkanaal(NL)

(72) Inventor: Dekker, Jan
Sirius 10
NL-9602 ND Hoogezand(NL)

(74) Representative: Urbanus, Henricus Maria, Ir.
c/o Vereenigde Octrooibureaux Nieuwe Parklaan 107
NL-2587 BP 's-Gravenhage(NL)

(54) A shake-screen apparatus.

(57) A shake-screen apparatus for separating solid matter and liquid, comprising a frame resiliently suspended in a plurality of supports, said frame including at least one vibration motor and at least one screening mat (8,9). The frame has two oppositely disposed side members extending longitudinally of the apparatus, each of said side members being fitted on the inside with supports to each of which there is attached at least one elongate lever plate (12) likewise extending longitudinally of the apparatus and pivotable about a shaft extending lengthwise of the apparatus. One of the longitudinal edges (15) of each lever plate (12) is bent in the direction of the associated side member and is adapted to engage in a hooked section provided at the corresponding longitudinal edge of a screening mat. Tensioning means (17) are provided between each lever plate and the corresponding side member for tensioning the bent longitudinal edge (15) of each lever plate (12) in outward direction.

./...

Croydon Printing Company Ltd.

FIG 2

0185409

Title: A shake-screen apparatus

The present invention relates to a shake-screen apparatus for separating solid matter and liquid, comprising a frame suspended resiliently in a plurality of supports, said frame having at least one vibration motor and at least one screening mat.

Such shake-screen apparatuses are known per se and are used e.g. in the oil industry for separating drilling fluid and the solid particles contained therein, after use, from each other.

The prior art shake-screen apparatuses face a number of problems. For instance, the screening mats in the prior art apparatuses cannot be cleaned and removed in a simple manner. Besides, the shaking behaviour in the known apparatuses cannot or hardly be adjusted to the circumstances. Also, cracks often occur in the frame of the known apparatuses, mainly at the attachment location of the vibration motors, owing to the vibrations produced. Finally, the prior art apparatuses are rather hostile to the environment, because they produce much noise in operation.

It is an object of the present invention to eliminate the above drawbacks and to provide in general an effective, robust and low-noise shake-screening apparatus.

To this end, broadly, a shake-screening apparatus of the above described type is characterized in that the frame has two oppositely disposed side members extending longitudinally of the apparatus, each of said side members being fitted on the inside with supports to each of which there is attached at least one elongate lever plate likewise extending longitudinally of said apparatus and pivotable about a shaft extending lengthwise of the apparatus, one of the longitudinal edges of each lever plate being bent in the direction of the associated side member and being adapted to engage in a hooked section provided at the corresponding longitudinal edge of a screening mat, with tensioning means being provided between each lever plate and the corresponding side member for tensioning the bent longitudinal edge of each lever plate in outward direction.

One embodiment of the present invention will now be described, by way of example, with reference to the accompanying drawings, in which:

Fig. 1 is a diagrammatic top view of a shake-screen apparatus according to the present invention;

Fig. 2 is a cross-section on the line II-II of Fig. 1;

Fig. 3 is a side view of the shake-screening apparatus of Fig. 1; and

Fig. 4 shows a detail of the attachment of a shake-screening apparatus according to the present invention.

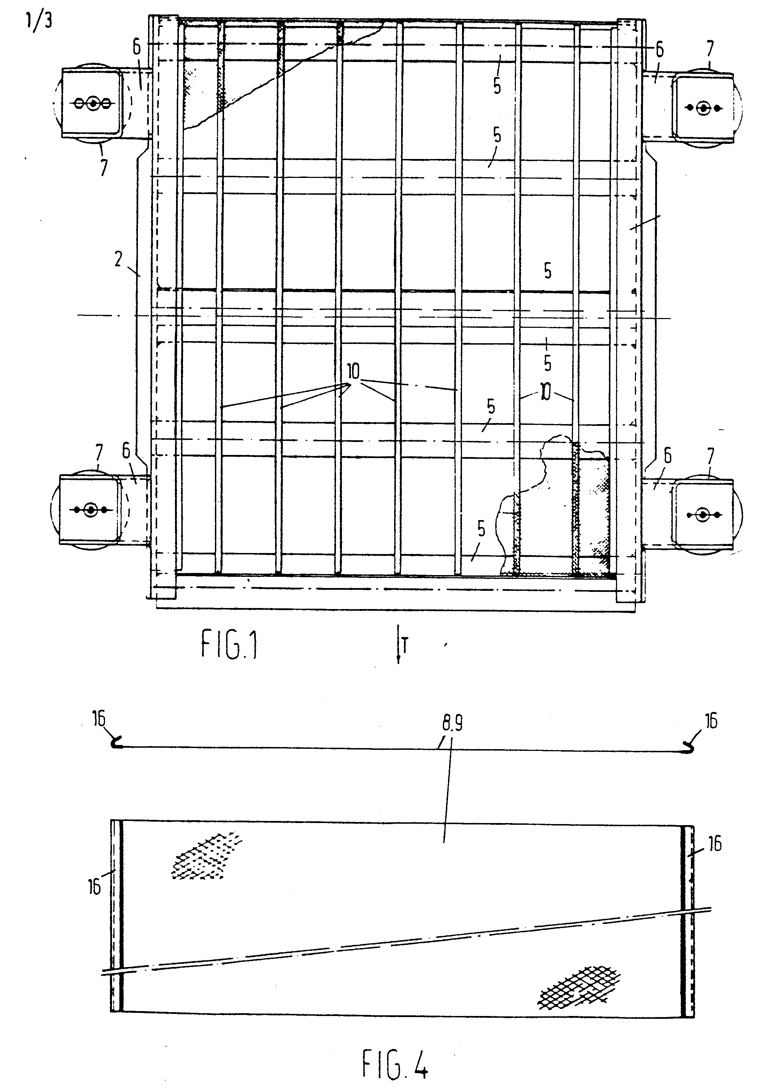

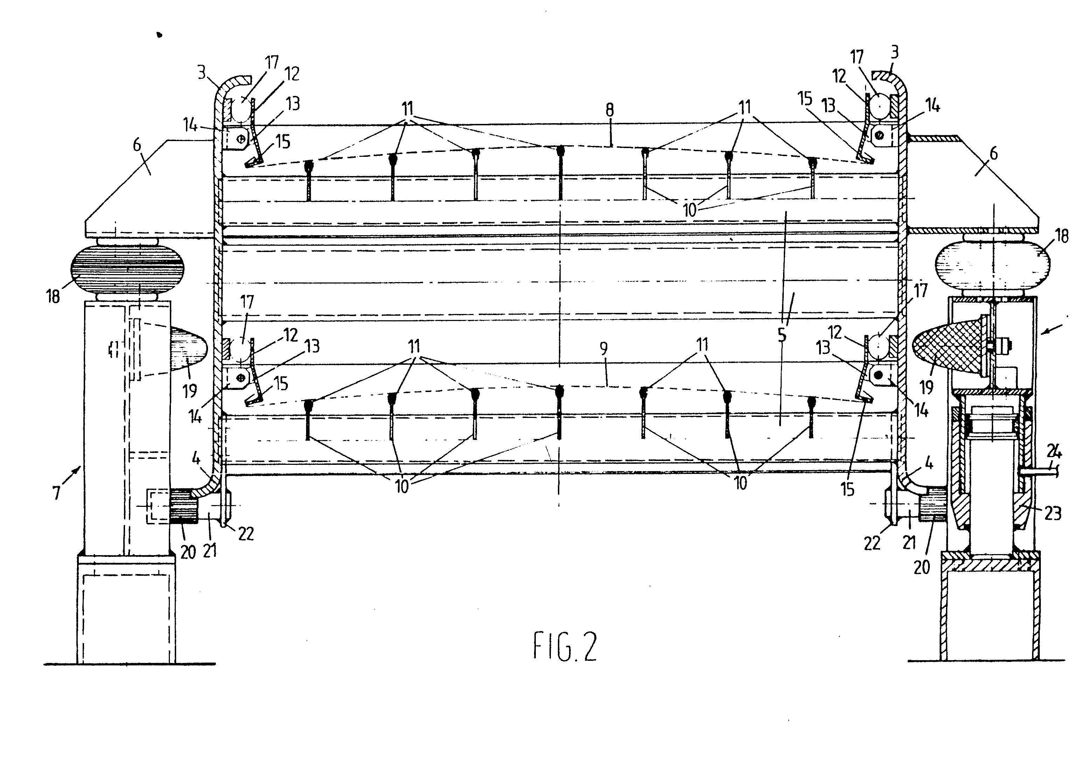

Fig. 1 is a top view of an embodiment of a shake-screening apparatus according to the present invention. The apparatus has a frame comprising two parallel, spaced apart side members 1,2, each consisting of a metal plate having an inwardly bent upper edge 3, and an outwardly bent lower edge 4, respectively (see Fig. 2). The side members are interconnected by round metal tubes 5 welded on both ends onto the side members. For the purpose of an optimally robust construction, the tubes 5 preferably extend through corresponding openings in the side members, each tube end, both on the inside and on the outside of the respective side member, being welded to the side member.

Each of the side members is fitted with two outwardly directed projections 6 made in the embodiment shown of square tube section by means of which the frame rests on four columns 7.

Between the side members there is disposed at least one screening mat, e.g. made of stainless steel.

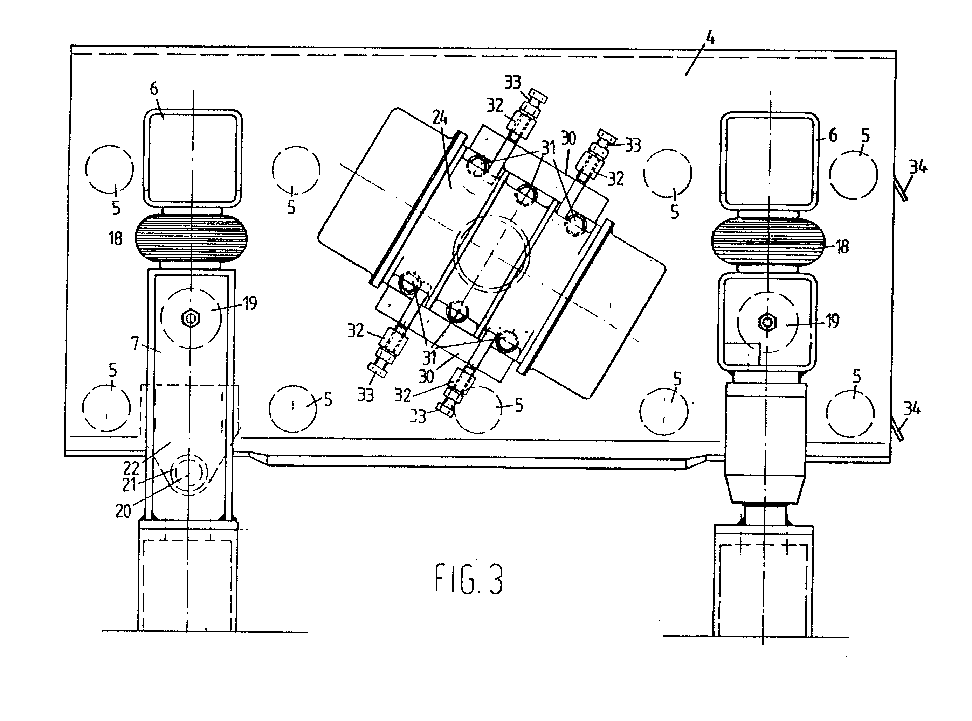

A vibration motor 24 (Fig. 3) is mounted on at least one of the side members.

The figures show a double-deck screening apparatus wherein two screening mats 8,9 are superimposed. The mats are supported between the side members at uniform interspaces by metal strips 10 extending parallel to the side members, each strip being welded to a plurality of the tubes 5 and having at the free upper edge a synthetic plastics or rubber section 11 to prevent damage to the screening mat.

The screening mats are tensioned over the strips 10 by means of tensioning means to be described hereinafter. To enable a proper tension of the mats, the height of the strips 10 gradually decreases from the centre of the apparatus in the direction of the two side members. Each screening mat, consequently, has a convex shape in the tensioned condition, as shown in Fig.2.

For tensioning the screening mats, use is made according to the present invention of lever plates 12 pivotally mounted at a suitable height on the inside of the side members. The lever plates consist of elongate plates extending preferably the entire length of the screening apparatus approximately parallel to the side members and being fitted about half-way their height with a plurality of lugs 13 directed to the side members, said lugs being pivoted to corresponding, inwardly extending supports 14 disposed on the side members. The lower edge of each lever plate is bent in the direction of the associated side member, as shown at 15.

At the longitudinal edges, the screening mats include attachment strips 16 (fig.5) bent inwardly and adapted to engage about the outwardly bent lower edges of the lever plates, as shown in fig. 2.

The attachment strips extend preferably the entire length of the mat, so that the tension is uniformly distributed over the entire mat, which enhances a long life of the mat.

For tensioning the screening mat, after the attachment strips have been hooked to the lever plates, it is only necessary to move the portion of the lever plates situated above the pivot shaft inwardly and to fix it in the desired position. To this end, use could be made of adjusting bolts or the like extending through threaded openings in the side members, the ends of said bolts being screwable against the lever plates. Such a construction would already enable a very quick replacement of the mats.

According to the present invention, however, a different method is preferably employed, wherein use is made of an inflatable hose 17 disposed between the upper portion of each lever plate and the associated side member.

By supplying air to the hollow space within the hose, the upper portion of the lever plate moves inwardly, so that the bent lower edge pivots outwardly, thereby tensioning the screening mat. The pressure prevailing in the hose determines the tension of the mat.

The hoses include a connection, not shown, for a pressure line communicating with a source of compressed air. The pressure line contains a valve. Therefore, only the valve need be opened for tensioning the mat (after the mat has been hooked about the lever plate) until the desired pressure prevails in the hoses 17. Hoses 17 further include, in a manner known but not further shown, a relief valve for emptying the hoses if the mat is to be removed or the tension is to be reduced. The pressure in hoses 17, if desired, can be controlled by a manometer. It is possible to connect the two hoses 17 associated with a screening mat to one and the same pressure line, but the installation, if desired, may also be arranged in such a manner that the pressure in the hoses 17 can be adjusted to the correct value hose by hose. Besides, it is also possible to operate the hoses 17 hydraulically.

It is observed that the pivot plates likewise have the function of longitudinal guide plates for the material to be treated, so that separate longitudinal guide plates are not necessary.

By employing the sections 11 and the pressure hoses 17, there is obtained a slightly flexible attachment of the screening mat, which also contributes to a long life of the mat and further has a noise-damping effect.

The tension of the screening mats can be adjusted in a simple manner, even in operation, to the composition of the material to be treated. For instance, in general a higher screening tension will be set when coarser material has to be processed so as to prevent the mat from "flapping" and from being damaged thereby.

Between each projection 6 and the top of the associated column 7 there is provided in the embodiment shown a hollow ball or bellows 18 of flexible material, e.g. rubber. The projections 6 of the frame rest on said rubber balls or bellows. Said rubber balls contribute to a low-noise operation of the apparatus. According to a preferred embodiment, the pressure prevailing in the rubber balls or bellows can be adjusted, enabling to influence the shaking behaviour of the apparatus and to produce small variations in the position of the frame relative to the columns 7. Preferably, the spaces in the two front rubber balls or bellows are interconnected by a conduit and the two rear rubber balls or bellows are likewise interconnected by a conduit. The terms "front" and "rear" are used in relation to the direction of movement of the material through the apparatus. This direction of movement is indicated in Fig. 1 with an arrow T.

The rubber balls or bellows substantially damp the vibrations of the frame produced by the vibration motor(s). It has been found that thus considerably less vibration is transmitted to the supports than in the case that the frame, as conventional, is carried by a helical springs.

Each of the columns 7 includes a rubber or synthetic plastics buffer 19 directed to the members. Buffers 19 serve for damping lateral movements of the screening apparatus which may occur during the engagement and/or disengagement of the vibration motor(s). The buffers preferably have a parabolic shape and their apices are directed to the side members.

Underneath the buffers there is provided a vertical slot or opening in the columns in one or more of the columns adjacent the lower edge of the side members. Such a slot or opening can be obtained in a simple manner by a U-shaped design of the column at that location, with the opening of the U-shape being directed to the side members.

In the opening extends a projection 21 attached to the side member and having a sleeve 20 of flexible material, e.g. rubber. The projection, as shown, may be a stub shaft welded to a fitting plate 22 which, in turn, is attached to the underside of the side member.

The stub shafts having rubber sleeves serve for counter-acting an excessive stroke of the frame in horizontal direction and contribute to the robustness and the low-noise operation of the apparatus.

According to a preferred embodiment, at least two of the columns 7 e.g. the two front ones or the two rear ones, may be adjustable in height, thus compensating uneven foundations and moreover allowing adjustment of the inclination of the screening apparatus and hence the screening effect and the transport speed of the material to be treated through the apparatus.

The adjustable columns 7 comprise to that end, as shown in Fig. 2, a hydraulic cylinder 23. By supplying hydraulic fluid to the cylinder by means of a conduit 24, the height of the column can be adjusted.

Fig. 3 is a side view of the apparatus shown in Figs. 1 and 2. As shown in Fig. 3, a vibration motor 24 is mounted on at least one of the side members. Preferably, however, a vibration motor is mounted on both side members. The vibration motors are mounted at an angle of approximately 30° to the horizontal, so that there is produced such a vibrating movement that the material to be treated performs a serrated movement over the screening mat(s), thus increasing the efficiency of the apparatus.

The vibration motors are preferably electric motors, offering the possibility of adjusting the vibration frequency in a relatively simple manner by means of a potentiometer. As a result, also the shaking behaviour can again be adjusted to the material to be treated.

According to the prior art, the vibration motors were bolted to the frame. As a result of the transverse forces acting on these bolts in operation, however, a number of bolts is frequently fractured. Consequently, according to the present invention an attachment method is used which substantially relieves the fixing bolts of transverse forces.

To this end, the vibration motors are placed with their feet between two fitting plates 30 welded onto the respective side member. The foot of the motor is subsequently screwed onto the side member by means of a plurality of bolts 31. Moreover, adjacent the fitting plates 30, a plurality, four in the embodiment shown, of blocks 32 are welded onto each side member. The blocks contain threaded bores extending parallel to the side member in the direction of the vibration motor. Into said bores are screwed clamping bolts 33 whose ends are screwed against the housing of the vibration motor. Subsequently, the clamping bolts are locked in a known manner by means of an additional nut.

In this manner, all bolts are substantially subjected to tensile or compressive load and fracture occurs to a considerably lesser extent. Moreover, a relatively small number of fixing bolts will be sufficient, which enables a quick (de)mounting.

Fig. 3 further shows two guide plates 34 for the material falling off the screening mats at the end of the apparatus. Said guide plates impede unnecessary fouling of the apparatus and prevent the material falling off a screen from dripping along the last tube 5 and arriving again in the apparatus.

It is observed that the embodiment shown concerns a double-deck apparatus having two superimposed screening mats. However, the present invention also applies to a shake-screening apparatus having a different number of screening mats.

It is further observed that, due to the construction of the frame chosen, the screening mats, at their tops, are entirely free from obstacles, enhancing an effective screening operation and simplifying the cleaning of the installation.

It is finally remarked that, after the foregoing, various modifications are obvious to one skilled in the art. Such modifications are deemed to fall within the scope of the present invention.

0185409

## C L A I M S

1. A shake-screen apparatus for separating solid matter and liquid, comprising a frame resiliently suspended in a plurality of supports, said frame including at least one vibration motor and at least one screening mat, characterized in that the frame has two oppositely disposed side members extending longitudinally of the apparatus each of said side members being fitted on the inside with supports to each of which there is attached at least one elongate lever plate likewise extending longitudinally of the apparatus and pivotable about a shaft extending lengthwise of the apparatus, one of the longitudinal edges of each lever plate being bent in the direction of the associated side member and being adapted to engage in a hooked section provided at the corresponding longitudinal edge of a screening mat, and tensioning means being provided between each lever plate and the corresponding side member for tensioning the bent longitudinal edge of each lever plate in outward direction.

2. A shake-screen apparatus according to claim 1, characterized in that the tensioning means comprise an inflatable hose disposed between the side member and a portion of the lever plate located on the other side of the pivot shaft than the bent longitudinal edge.

3. A shake-screen apparatus according to claim 1 or 2, characterized in that there are provided between the side members of the frame a plurality of parallel strips extending longitudinally of the apparatus, said strips being fitted at the top with flexible material, and on which the tensioned screening mat rests, the height of the strips decreasing from the centre of the apparatus towards the side members.

4. A shake-screen apparatus according to claim 1, characterized in that each of the side members consists of a single metal plate whose upper and lower edges are bent, said side members being interconnected by a plurality of cross tubes welded in openings in the side members.

5. A shake-screen apparatus according to claim 3 or 4, characterized in that the strips are each attached to a plurality of cross tubes.

6. A shake-screen apparatus according to claim 1, characterized in that each of the side members includes two projections extending outwardly and disposed adjacent each of the ends of a side member, each said projections resting on a column through the intermediary of a hollow ball or bellows of flexible material.

7. A shake-screen apparatus according to claim 6, characterized in that the pressure in each ball or bellows of flexible material is adjustable.

8. A shake-screen apparatus according to claim 6, characterized in that each column is fitted with a buffer extending to the adjacent side member.

9. A shake-screen apparatus according to claim 8, characterized in that the buffers comprise a parabolic rubber member whose apex faces the side member.

10. A shake-screen apparatus according to claim 6, characterized in that at least two of the columns contain a hydraulic cylinder for adjusting the height of the column.

11. A shake-screen apparatus according to claim 6, characterized in that at least one side member, adjacent at least one of the columns, carries an outwardly extending projection having a sleeve of flexible material, said projection extending into an opening in the respective column.

12. A shake-screen apparatus according to claim 1, characterized in that there is mounted on the outside of each side member a vibration motor whose longitudinal axis makes an acute angle with the horizontal.

13. A shake-screen apparatus according to claim 12, characterized in that the foot of each vibration motor is bolted to the corresponding side member and, in mounted condition, lies between two fitting plates welded to the side member and that furthermore at least one block having a threaded bore directed to the vibration motor is welded to the side member on the side of the fitting plates away from the vibration motor, with a clamping bolt being screwed into the bore, the end of said bolt pressing against the housing of the vibration motor.

14. A shake-screen apparatus according to claim 1, characterized in that adjacent the end of each screening mat the frame is fitted with a sloping guide plate for material falling off the screen.

FIG.1

FIG.4

FIG.2

FIG. 3